# EUROPÄISCHE PATENTSCHRIFT

(11) **EP 0 799 949 B1**
(45) Veröffentlichungstag und Bekanntmachung des Hinweises auf die Patenterteilung: **10.10.2001**
(21) Anmeldenummer: 96118812.5
(22) Anmeldetag: 23.11.1996
(51) Int. Cl.: E04F 13/14, B32B 9/04, B32B 17/06

(54) **Natursteinelement**
Natural stone element
Elément de pierre naturelle

(30) Priorität: 04.04.1996 DE 19613439
(43) Veröffentlichungstag der Anmeldung: 08.10.1997
(73) Patentinhaber: Blanke-Bohne, J., Prof. Dr., 44879 Bochum (DE)
(72) Erfinder: Blanke-Bohne, J., Prof. Dr., 44879 Bochum (DE)
(74) Vertreter: KOHLER SCHMID + PARTNER

(56) Entgegenhaltungen:
- EP-A- 0 122 357
- BE-A- 898 535
- DE-C- 19 518 675
- JP-A- 4 042 876

## Beschreibung

Die Erfindung betrifft ein Natursteinelement mit mindestens einer dünnen Natursteinplatte und einer damit großflächig verbundenen Tragplatte, die aus wenigstens einer Glasscheibe besteht, die mittels einer transparenten Harzschicht mit der Natursteinplatte verbunden ist, wobei das Natursteinelement an einem weiteren Natursteinelement bzw. an einem Trägerelement befestigbar ist.

Ein derartiges Natursteinelement ist bekannt aus der JP-A-404042876.

Ein Natursteinelement für die Verkleidung von Bauwerksfassaden ist bereits aus der DE 38 03 739 A1 bekannt. In dieser Druckschrift ist eine Natursteinplatte beschrieben, welche an der Rückseite mit einer keramischen Platte verklebt ist. Dieses mit einer keramischen Platte verbundene Natursteinelement soll als Fassadenverkleidung geeignet sein, da angeblich auch bei großen Formaten und hohen Temperaturwechselbeanspruchungen keine Ablöseerscheinungen oder Brüche in der Natursteinplatte festzustellen sind. Grundsätzlich hat eine derartige Lösung den Vorteil, daß aufgrund der großflächigen Verbindung von Natursteinplatte und Keramikplatte die Natursteinplatte eine sehr geringe Wandstärke aufweisen kann und neben der erzielbaren Gewichtseinsparung auch eine daraus resultierende Materialeinsparung erzielt wird, wobei der optische Eindruck von massiven Bauelementen erhalten bleibt.

Über längere Zeiträume hinaus sind jedoch trotzdem aufgrund der eindringenden Feuchtigkeit sowie Alterungsprozessen des verwendeten Klebers Ablösungen zu befürchten.

Darüber hinaus ist es ganz allgemein bekannt, Natursteinplatten mit reduzierter Wandstärke sowie dünnwandige leichtgewichtige Tragplatten aus anderen Werkstoffen, wie Aluminium, Kunststoff oder ähnlichem, zu verbinden. Derartige Elemente haben jedoch den Nachteil, daß insbesondere bei größeren Formaten aufgrund der Temperaturwechselbeanspruchung und der meist unterschiedlichen Wärmeaustauschkoeffizienten Brüche und Ablösungen an der Natursteinplatte auftreten können, wodurch es zur Gefährdung durch herabstürzende Natursteinteile kommen kann.

Auch ist aus der DE 37 27 157 A1 ein Naturstein-Verkleidungselement bekannt, bei dem eine sehr dünne, nicht selbsttragende Natursteinplatte mit Profil-Ausnehmungen versehen ist, welche sich zumindest abschnittsweise horizontal bezogen auf die Montageposition erstecken, und in welche korrespondierende Profilvorsprünge einer parallel zu der Natursteinplatte verlaufenden verwindungssteifen Trägerplatte formschlüssig eingreifen. Zusätzlich zu dieser formschlüssigen Verbindung von Natursteinplatte und Trägerplatte kann nach dieser bekannten Lösung die Natursteinplatte flächig mittels eines temperaturbeständigen Klebers mit der Trägerplatte verbunden werden.

Diese Lösung führt zwar zu einer relativ beständigen Verbindung von Trägerplatte und Natursteinplatte, ist jedoch nachteiligerweise sehr aufwendig in der Herstellung und Montage.

Denkbar ist auch eine Verklebung der Natursteinplatte mit einer Tragplatte mittels einer thermoplastischen hochreißfesten Kunststoffklebefolie. Derartige Kunststoffolien sind beispielsweise aus der Herstellung von Verbundglas-Sicherheitsscheiben bekannt und bestehen in der Regel aus weichgemachtem Polyvinylbutyral (PVB). Die Verwendung derartiger Folien im allgemeinen und von PVB im besonderen weist jedoch eine ganze Reihe von Nachteilen auf:

Derartige Folien werden aus thermoplastischen, hochviskosen Kunststoffen mit einer sehr gleichmäßigen Dickenverteilung hergestellt. Dies ist beispielsweise vorteilhaft bei der Verwendung von Spiegelglas, erweist sich jedoch bei der Verwendung von Draht-, Ornament- oder thermisch vorgespanntem Glas als erheblicher Nachteil, da die letztgenannten Gläser wellige Oberflächen aufweisen und nur unter hohen Fehlerquoten mittels Folien verbunden werden können. Natursteinplatten andererseits weisen nach dem Sägen ebenfalls deutlich sichtbare Markierungen auf und sind nach dem Feinpolieren in der Oberfläche wellig. Dies führt in jedem Fall bei einem Verbund von Natursteinplatten mit Tragplatten aus Glas oder von Natursteinplatten untereinander zu erhöhten Problemen.

Bei der Verwendung von in der Verbundglasherstellung allgemein üblichen Folien aus weichgemachtem PVB ergeben sich darüberhinaus noch weitere Nachteile. PVB erreicht im allgemeinen eine gute, beständige Verklebung zum Glas. Natursteine jedoch, wie beispielsweise Granit, Marmor und so weiter, weisen dagegen eine völlig andere chemische Zusammensetzung und damit auch grundsätzlich veränderte Oberflächeneigenschaften auf, so daß meistens nur äußerst unbefriedigende Verklebungen erreicht werden können. Insbesondere ist die Güte einer Verklebung mit PVB sehr anfällig gegen Feuchtigkeit. Beim Verkleben von Glasplatten zur Herstellung von Verbundgläsern ist die Folie vollständig gegen Feuchtigkeit geschützt, während beim Verkleben von Natursteinen stets Wasser im Stein vorhanden ist oder durch feine Kapillaren und Risse Zutritt zur PVB-Folie findet. Dies mindert die Beständigkeit der Verklebung und damit den Gebrauchswert des Verbundes noch weiter. Dies gilt ganz besonders für den Fall, daß eine der Glas- oder Steinplatten bricht. Durch den entstandenen Riss in der Oberfläche kann dann sehr schnell viel Feuchtigkeit in die Folie eindringen und zu einem Versagen der Verklebung führen. Bei Verwendung derartiger Verbundelemente beispielsweise im Bereich von Fassaden oder Innenausbauten von Gebäuden muß jedoch eine viele Jahrzehnte lange sichere Haltbarkeit gewährleistet sein. Insbesondere Außenfassaden sind aber in der Regel ständigen Witterungseinflüssen ausgesetzt, so daß ein Verbund von Natursteinplatte und Tragplatte mittels einer Folie, insbesondere mittels einer hochreißfesten thermoplastischen PVB-Folie nicht akzeptabel wäre.

Aus der oben zitierten JP-A-404042876 ist ein transluzentes Natursteinelement mit den eingangs beschriebenen Merkmalen bekannt, bei dem eine Natursteinplatte mittels einer dünnen Harzschicht in einem Autoklaven-Verfahren unter Druck- und Hitzezufuhr mit einer Glasscheibe verbunden wird. Dadurch entsteht ein Adhäsionsverbund, der einerseits keinen hohen Anforderungen an die Haftfestigkeit genügt, andererseits ein Eindringen von Luftfeuchtigkeit oder gar Wasser in den Harzfilm zwischen der Natursteinplatte und der Glasscheibe auf Dauer nicht verhindern kann, so daß bei Außenanwendungen bei einem kapillaren Eindringen von Feuchtigkeit im Endeffekt ein Erblinden des Verbundelements und möglicherweise sogar eine Ablösung der Natursteinplatte von der Glasscheibe erfolgen kann. Auch erlaubt der Autoklavenprozeß des bekannten Harzfilmverbundes keine blasenfreie Verarbeitung auf der porösen Steinoberfläche der Natursteinplatte, so daß sich aufgrund der Druckanwendung Luftbläschen auf der Naturstein-Verbundschichtseite bilden können, welche zu Delaminierungen führen. Ein weiterer Nachteil des bekannten Verbundelements besteht darin, daß der Harzfilmverbund (ebenso wie die oben beschriebenen Folienverbunde) in der Regel mechanische Spannungen verursacht, welche umso größer sein werden, je mehr die Planitäten von Natursteinplatte und Glasscheibe voneinander abweichen. Auf diese Weise lassen sich mit dem bekannten Verbundverfahren beispielsweise keine grobstrukturierten Natursteinoberflächen verarbeiten. Für eine Anwendung auf Natursteinplatten mit Schiefer, Sandstein oder Quarziten wäre das bekannte Verbundverfahren völlig ungeeignet.

Demgegenüber besteht nun die Aufgabe der Erfindung darin, ein universell, insbesondere im Außenbereich einsetzbares Natursteinelement zu schaffen, welches einerseits einfach herzustellen ist und andererseits eine sehr sichere Verbindung zwischen der Natursteinplatte und einer Tragplatte gewährleistet, wobei die oben beschriebenen Nachteile eines Adhäsionsverbundes mittels eines unter Hitze- und Druckanwendung eingebrachten Harzfilmes vermieden werden.

Erfindungsgemäß wird diese Aufgabe dadurch gelöst, daß die Harzschicht eine Gießharzschicht auf der Basis von Polyesterharz, Poly(methymeth)acrylat, Polyurethanen oder Epoxiden ist, und daß im Harz der Gießharzschicht ein Haftvermittler auf der Basis von einem oder mehreren Silanen und/ oder Titanaten und/oder Aluminaten enthalten ist. Die Gießharzschicht des erfindungsgemäßen Natursteinelements kann wahlweise auch splitterbindend, schalldämmend und/oder UV-beständig sein.

Beim erfindungsgemäßen Natursteinelement besteht nicht nur der wesentliche Vorteil, daß durch die Verbindung der beiden Platten mittels der Gießharzschicht im Falle eines Bruchs des Natursteins bzw. des Glases die erstarrte Harzschicht splitterbindend wirkt, sondern diese Verbindung ist auch besonders widerstandsfähig gegen Biegungen und Temperaturwechselbelastungen. Sie bietet darüber hinaus einen völligen Schutz gegen das Eindringen von Feuchtigkeit in den erfindungsgemäßen Diffusionsverbund.

Durch das erfindungsgemäß verwendete Gießharz als Klebeschicht zwischen der Natursteinplatte und der Tragplatte werden alle Unebenheiten in der Oberfläche von Draht-, Ornament- und thermisch oder chemisch vorgespanntem Glas, sowie die für Natursteinplatten typischen Oberflächenwelligkeiten ideal ausgeglichen. Dabei zeigt sich, daß nicht nur zum Glas, sondern überrschenderweise auch zum Naturstein eine genügend hohe Oberflächenspannung erreicht wird, um auch bei unebener Oberfläche eine vollständige Benetzung durch das Gießharz und damit eine gute Verklebung zu erreichen.

Bei dem erfindungsgemäß eingesetzten Gießharz handelt es sich um ein Gießharz auf der Basis von Polyesterharz, Poly(methymeth)acrylat, Polyurethanen oder Epoxiden, wie z.B. aus der Verbundglastechnik bekannt ist.

Derartige Gießharze sind erheblich unempfindlicher gegenüber der Aufnahme von Feuchtigkeit als die üblicherweise verwendeten Kunststoffklebefolien. Dies äußert sich sowohl in einer höheren Beständigkeit der Verklebung unter Einfluß von Wasser als auch in einer geringeren Neigung zur Eintrübung. Während beispielsweise PVB-Folien bereits nach Aufnahme von etwa einem Prozent Wasser eine deutliche Neigung zur Trübung zeigen, können die erfindungsgemäß verwendeten Gießharze in wesentlich größeren Mengen Wasser aufnehmen, bevor optisch nachteilige Veränderungen auftreten.

Dadurch, daß beim erfindungsgemäßen Natursteinelement im Harz der Gießharzschicht ein Haftvermittler enthalten ist, läßt sich die Güte der Verklebung des Natursteins mit der Glasplatte gezielt verbessern. Insbesondere ist auch eine gleichzeitige gute Verklebung zu völlig verschiedenen Materialien erreichbar, was beispielsweise mit Kunststoffklebefolien nach dem Stand der Technik nicht oder jedenfalls nicht ohne intensive Vorbehandlung des Materials möglich ist. Außerdem tragen derartige Haftvermittler auch zu einer noch weiter erhöhten Unempfindlichkeit des Gießharzes gegenüber der Aufnahme von Feuchtigkeit bei.

Der Haftvermittler ist auf der Basis von einem oder mehreren Silanen und/oder Titanaten und/oder Aluminaten aufgebaut. Beispielsweise kann bei Weiterbildungen der Haftvermittler Vinyltrimethoxysilan und/oder Vinyltriethoxysilan und/oder Vinyltri(ethoxymethoxy)silan und/oder 3-Mercaptopropyltrimethoxysilan und/oder 3-Glycidylpropyltrimethoxysilan und/ oder 3-Aminopropyltriethoxysilan und/oder N-β-aminoethyl-γ-aminopropyl-trimethoxysilan und/oder Triethanolaminozirkonat und/oder Isopropyltitanat und/oder Triethanolamintitanat oder Mischungen dieser Haftvermittler enthalten.

Desweiteren erfüllt ein derartiges Natursteinelement alle bautechnischen Anforderungen, welche an Decken oder Wandverkleidungen gestellt werden, da durch die erfindungsgemäße Verbindung von Natursteinelement und Glasplatte mittels einer Gießharzschicht von dem Natursteinelement selbst bei einer Beschädigung keine Verletzungsgefahr ausgehen kann.

Letztlich sind die erfindungsgemäßen Natursteinelemente nicht nur relativ leicht, da dünne Natursteinplatten verwendet werden können, sondern auch der Materialverbrauch ist deutlich geringer. Trotzdem hat das erfindungsgemäße Natursteinelement den optischen Eindruck einer massiven Natursteinplatte.

Aus dem heterogenen Stand der Technik ist zwar - ausgehend von einer Glasverbundplatte, die aus zwei über eine Kunststoffklebefolie verbundenen Glasscheiben besteht - eine aus einer Glasscheibe und einem Metallblech bestehende Glasverbundplatte für Gebäudeverkleidungen bekannt (DE 38 18 557 A1). Hierbei wird eine dickere Glasscheibe aus Floatglas mittels einer Kunststoffklebefolie dauerhaft mit einem dünnen Metallblech verbunden. Bei diesem Stand der Technik sollen durch das rückseitige Metallblech die Brandschutzeigenschaften verbessert werden und außerdem die Undurchsichtigkeit der Glasverbundplatte gewährleistet werden.

Dagegen liegt dem erfindungsgemäßen Natursteinelement ein völlig anderer Grundgedanke zugrunde. Hierbei übernimmt nämlich die über eine Gießharzschicht mit dem Natursteinelement verbundene Glasscheibe eine Stabilisierungs- und Tragfunktion für die dünne Natursteinplatte. Dies ermöglicht einerseits eine wesentlich geringere Dicke der Natursteinplatte und andererseits wird auch bei Beschädigung der Natursteinplatte der Zusammenhalt des Natursteinelements gewährleistet.

Die im Zusammenhang mit den im Folgenden beschriebenen Ausführungsformen der Erfindung verwendeten Merkmale sind an sich aus der DE 295 08 453 U1 bekannt, allerdings im Zusammenhang mit einem Folien-Verbundelement.

Bei einer vorteilhaften Ausführungsform der Erfindung weist die Natursteinplatte eine Sichtfläche auf, an welcher mindestens eine Schutz-Glasscheibe angeordnet ist. Diese Ausführungsform ist insbesondere für die Verwendung im Außenbereich vorteilhaft. Damit bleibt einerseits der optische Eindruck des Natursteinelements erhalten, während andererseits ein vollständiger Schutz gegen mechanische Beschädigung aber auch chemische Veränderungen bzw. Ablösungen im Bereich der Natursteinplatte gegeben sind.

Desweiteren wird es mit Hilfe dieser erfindungsgemäßen Ausführungsform nunmehr auch möglich, Natursteine, wie beispielsweise Marmor, im Außenbereich z.B. auch als transluzente Natursteinelemente zu verwenden, welche eigentlich eine nicht ausreichende Witterungsbeständigkeit aufweisen. Bei schon bisher im Außenbereich verwendeten Natursteinen, wie z.B. Granit, schützt die außen am Naturstein angeordnete Glasscheibe desweiteren vor der Verwitterung sowie dem Moosansatz.

Letztlich ist mit Hilfe von Wasser und Reinigungsmittel ein derartiges, außen eine Glasscheibe aufweisendes Natursteinelement sehr einfach zu säubern, während eine übliche Natursteinfassade nur mit Hilfe von Säuren oder beispielsweise mit einem Sandstrahler gereinigt werden kann.

Bei einer weiteren Ausführungsform der Erfindung ist die Glasscheibe an der von der Sichtfläche wegweisenden Fläche angeordnet. In diesem Fall können großformatige Natursteinelemente insbesondere für den Innenbereich von Gebäuden geschaffen werden, die den optischen Eindruck von massiven Natursteinelementen aufweisen, wobei die eigentliche Beständigkeit durch die mittels der Gießharzschicht abseits der Sichtfläche angeordneten Glasscheibe erzielt wird. Auch wäre es bei derartigen Ausführungsformen denkbar, daß dann die notwendigen Befestigungselemente im Bereich der als Tragplatte dienenden Glasscheibe für den Betrachter unsichtbar angeordnet sind.

Bei einer bevorzugten Ausführungsform der Erfindung ist die Natursteinplatte beidseitig jeweils mit mindestens einer Glasscheibe versehen. Dieses erfindungsgemäße Natursteinelement hat den Vorteil zweier Sichtflächen, die einerseits einen guten optischen Eindruck machen und andererseits vollständig geschützt sind. Derartige Natursteinelemente sind beispielsweise als Sichtschutzelemente oder Zwischenwände mit geringem Gewicht und hoher Beständigkeit einsetzbar.

Bei einer weiteren vorteilhaften Ausführungsform des erfindungsgemäßen Natursteinelements kann die Glasscheibe aus Floatglas, Ornamentglas, Spiegelglas, Drahtspiegelglas, Brandschutzglas, Wärmeschutzglas, Schallschutzglas, Sicherheitsglas, hitzebeständigem Glas , Borosilicat-Glas bzw. Keramikglas oder Isolierglas bestehen.

Besonders bevorzugt sind Ausführungsformen, bei denen die Glasscheibe aus vorzugsweise thermisch, oder aber auch chemisch teilvorgespanntem Sicherheitsglas besteht.

Weiter vorteilhaft sind auch Ausführungsformen, bei denen die Glasscheibe aus thermisch oder chemisch vorgespanntem Einscheiben-Sicherheitsglas besteht.

Bei einer besonders bevorzugten konstruktiven Ausführungsform besteht ein als Winkelbauteil ausgebildetes Natursteinelement aus mehreren miteinander winklig verbundenen Natursteinbauteilen, welche über eine Gießharzschicht mit entsprechenden Glasbauteilen verbunden sind.

Die im Folgenden beschriebenen Anwendungsbeispiele sind keine Ausführungsformen der Erfindung, sondern sollen lediglich das Verständnis der Erfindung erleichtern: So kann das Natursteinelement durch ein doppelrahmenartiges, an einem Bauwerk befestigbares Längsprofil eingefaßt und zugleich mit den benachbarten Natursteinelementen verbunden sein. Eine Weiterbildung sieht vor, daß das Längsprofil als Rechteckprofil ausgebildet ist und jeweils eine zum Bauwerk sowie eine zum Natursteinelement gerichtete, vergrößerte Anlageplatte aufweist, daß an der Natursteinelement-Anlageplatte mittig ein im rechten Winkel dazu angeordneter Distanzhalter angeformt ist, daß beidseitig des Distanzhalter jeweils ein zwischen Dichtungen liegendes Natursteinelement angeordnet ist, und daß außen an den Natursteinelementen eine Spannplatte anliegt, die von einem durch den Distanzhalter und das Rechteckprofil bis in das Bauwerk hindurchgreifenden Gewindebolzen angepreßt wird.

Weiterhin kann auch vorgesehen sein, daß jedes einzelne Natursteinelement im Bereich von Durchgangsbohrungen durch jeweils ein Befestigungselement punktuell befestigbar ist, daß das Befestigungselement topfförmig ausgebildet ist und eine zum Bauwerk sowie eine zum Natursteinelement gerichtete, vergrößerte Anlageplatte aufweist, daß an der Natursteinelement-Anlageplatte mittig ein im rechten Winkel dazu angeordneter Distanzhalter angeformt ist, daß beidseitig des Distanzhalters jeweils ein zwischen Dichtungen liegendes Natursteinelement angeordnet ist, und daß außen an dem Natursteinelement eine Spannplatte anliegt, die von einem durch den Distanzhalter und das Befestigungselement bis in das Bauwerk hindurchgreifenden Gewindebolzen angepreßt wird. Bei einer Weiterbildung ist die Spannplatte außenseitig von einem Zierprofil abdeckbar.

Vorteilhaft ist es auch, daß das Natursteinelement im Bereich der Natursteinplatte eine Mehrzahl von T-förmigen, durch die Platte hindurchgehenden Ausfräsungen aufweist, in denen jeweils ein zum Bauwerk gerichtetes Befestigungsteil angeordnet ist, welches an seinem freien Ende ein Innen- oder Außengewinde aufweist, daß bauwerksseitig ein schienenartiges, zum Natursteinelement hin geschlitztes Längsprofil befestigt ist, und daß die Verbindung von Längsprofil und Natursteinelement über eine mit einer Konturmutter versehene Hammerkopfschraube erfolgt, deren Kopf im Längsprofil geführt ist und deren Gewindeende mit dem Befestigungsteil verschraubt ist.

Weiterhin ist es vorteilhaft, daß das Natursteinelement wenigstens eine durchgehende Bohrung aufweist, in welche eine mit der Außenoberfläche zumindest bündig abschließende Senkkopfschraube einsetzbar ist, deren bauwerksseitig aus dem Natursteinelement herausragendes Gewindeteil an einer am Bauwerk angeordneten Unterkonstruktion befestigbar ist.

Eine Weiterbildung zeichnet sich dadurch aus, daß die bauwerksseitige Naturstein- bzw. Glasplatte mindestens eine Durchgangsbohrung aufweist, in die jeweils eine vor der Herstellung des Natursteinelements eingelegte Flanschmutter vollständig versenkt angeordnet ist, und daß bauwerksseitig über einen in die Flanschmutter eingeschraubten Gewindebolzen eine Befestigung des Natursteinelements an einer am Bauwerk angeordneten Unterkonstruktion erfolgt.

Ebenso ist es vorteilhaft, daß jede Flanschmutter mit einer bauwerksseitig anliegenden Laschenplatte verbunden ist, welche wenigstens eine an einer umlaufenden Stirnfläche des Natursteinelements anliegenden Anschlaglasche und eine zum Bauwerk ragende Befestigungslasche aufweist.

Bei einer Weiterbildung sind zwei gegenüberliegende Laschenplatten zweier Natursteinelemente mittelbar über die jeweiligen Befestigungslaschen untereinander und mit dem Bauwerk verbunden.

Die erfindungsgemäßen Natursteinelemente können zu Innen- und/oder Außenverkleidung von Bauwerken, als Türblatt, als Abdeckung einer Leuchte, als tragende Möbelbauteile, insbesondere für Regalwände, zur Eindeckung eines Daches, als Sichtschutzelement für Treppen- bzw. Balkongeländer oder dergleichen verwendet werden.

Weitere Vorteile der Erfindung ergeben sich aus der Beschreibung und der Zeichnung. Die Erfindung ist in der Zeichnung dargestellt und wird anhand von Ausführungsbeispielen näher erläutert. Es zeigen:
- Fig. 1: eine Schnittdarstellung eines Natursteinelements;
- Fig. 2: eine Schnittdarstellung eines Natursteinelements mit einer aus einer Mehrzahl von Glasschichten bestehenden Glasscheibe;
- Fig. 3: eine Schnittdarstellung eines Natursteinelements gemäß gemäß Fig. 1 mit beidseitig der Natursteinplatte angeordneten Glasscheiben;
- Fig. 4: eine Darstellung eines doppelrahmenförmigen Längsprofils zur Befestigung aneinanderstoßender Natursteinelemente an ein Bauwerk;
- Fig. 5: eine Darstellung eines punktuellen Befestigungselements zur Anordnung eines Natursteinelements an ein Bauwerk;
- Fig. 6: eine Ansicht eines an einem Bauwerk angeordneten Natursteinelements gemäß Fig. 5;
- Fig. 7: eine Darstellung einer sichtbaren, mit der Außenoberfläche bündigen Befestigung eines Naturstein-elements an ein Bauwerk;
- Fig. 8: eine Ansicht eines an einem Bauwerk befestigten Natursteinelements gemäß Fig. 7;
- Fig. 9: eine Darstellung einer weiteren sichtbaren, mit der Außenoberfläche bündigen Befestigung eines Natursteinelements;
- Fig. 10: eine Darstellung einer unsichtbaren Befestigung eines Natursteinelements an einem Bauwerk;
- Fig. 11: eine Darstellung einer unsichtbaren Befestigung zweier aneinanderstoßender Natursteinelemente an ein Bauwerk;
- Fig. 12: eine Explosionsdarstellung eines zusammengefügten Winkelbauteils;
- Fig. 13: ein zusammengefügtes Winkelbauteil gemäß Fig. 12;
- Fig. 14: eine Darstellung eines Türblattes aus einem Natursteinelement gemäß Fig. 3;
- Fig. 15: eine Darstellung eines als Bedachungsmaterial eingesetzten Natursteinelements gemäß Fig. 1;
- Fig. 16: eine Darstellung einer Möbeltragkonstruktion aus Natursteinelementen gemäß Fig. 3 und
- Fig. 17: eine Darstellung einer Leuchtsäule im wesentlichen aus Natursteinelementen gemäß Fig. 1.

In den Zeichnungen sind die unterschiedlichen Natursteinelemente insgesamt mit der Bezugsziffer 10 bezeichnet.

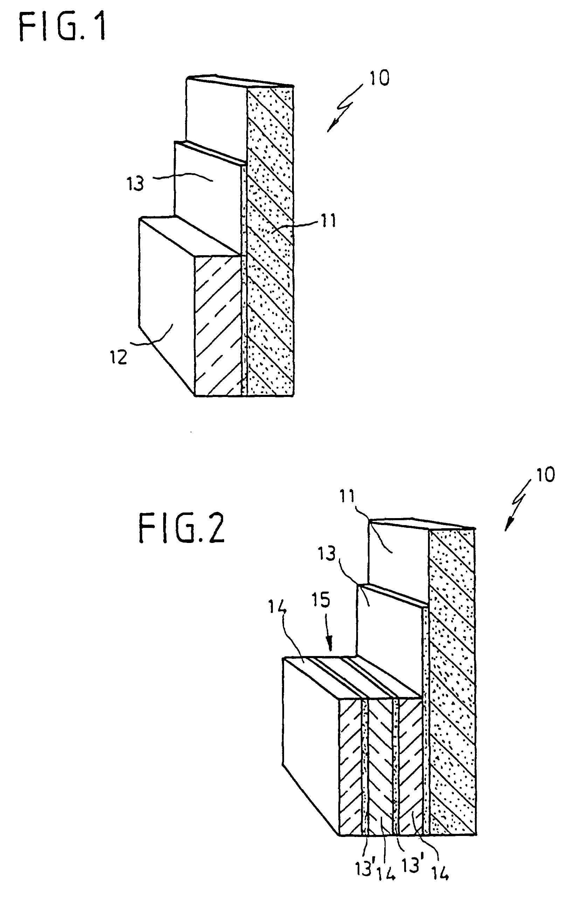

Die Figur 1 zeigt ein Natursteinelement 10, welches aus einer Natursteinplatte 11, beispielsweise aus Granit oder Marmor, und einer Glasscheibe 12 besteht. Als Glasscheibe 12 können einfaches Floatglas, thermisch bzw. chemisch teilvorgespanntes Sicherheitsglas oder thermisch bzw. chemisch vorgespanntes Einscheiben-Sicherheitsglas, Gußglas, Ornamentglas, beschichtetes Glas oder Kombinationen mit anderen Glasprodukten wie z. B. Drahtspiegelglas, Spiegelgläser, Keramikglas, Wärmeschutz-, Schallschutz-, Brandschutz- oder Sicherheitsgläser der unterschiedlichen Schutzklassen, entspiegeltes Glas, hitzebeständiges Glas, Isolierglas oder Photovoltaik-Fassadenelemente verwendet werden. Die Natursteinplatte 11 und die Glasscheibe 12 sind ganzflächig über eine transparente Gießharzschicht 13, die aus Brandschutzgründen hochtemperaturfest sein kann, miteinander verbunden.

Während ein derartiges, plattenförmiges Natursteinelement 10 eine Dicke von ca. 8 bis 20 mm hat, sind als Plattenstärken der Natursteinplatte 11 und der Glasscheibe 12 ca. 4 bis 10 mm vorgesehen. Damit wird ein Gewicht von ca. 20 bis 55 kg/m² bei einem Natursteinelement 10 erreicht.

Grundsätzlich kann ein derartiges Natursteinelement 10 je nach Orientierung beispielsweise im Außenbereich oder im Innenbereich von Gebäuden verwendet werden. Falls die Außenanbringung als Fassadenverkleidung vorgesehen ist, dient die außen angeordnete Glasscheibe 12 als Schutzschicht für die witterungsanfällige Natursteinplatte 11, wobei eine Fassade trotzdem von außen den Eindruck einer Natursteinfassade aufweist. Bei einer Innenanbringung dieses in Fig. 1 dargestellten Natursteinelements 10 könnte man dagegen die Glasscheibe 12 mittels der Gießharzschicht 13 hinter der Natursteinplatte 11 anbringen, so daß die Oberfläche der Natursteinplatte 11 unmittelbar dem Betrachter zugewandt ist. In diesem Falle könnte die Gießharzschicht 13 auch nicht-transparent sein.

Ein derartiges Natursteinelement 10 kann dadurch hergestellt werden, daß zunächst ein Natursteinblock mit einer Gattersäge in dünne Scheiben gesägt wird. Dabei werden in die entstehenden Sägefugen Metallplatten nachgeführt, um die jeweils dünnen Platten zu stützen. Nach der sogenannten Gatterung und einem umfänglichen Poliervorgang wird mittels Zwischenschaltung einer Gießharzschicht 13 unter Einwirkung von Wärme oder UV-Licht ein beständiger Verbund mit der Glasscheibe erzeugt. Dieser Vorgang läuft ähnlich ab wie bei der Herstellung von Schalldämmelementen aus Glas. In der Figur 2 ist ein Natursteinelement 10 mit einer Natursteinplatte 11 dargestellt, die mittels einer Gießharzschicht 13 mit einer aus mehreren Glasschichten 14 bestehenden Glasscheibe 15 (Panzerglas) verbunden ist. Die Glasschichten 14 sind jeweils wiederum mit transparenten Kunststoffklebefolien 13' untereinander verklebt.

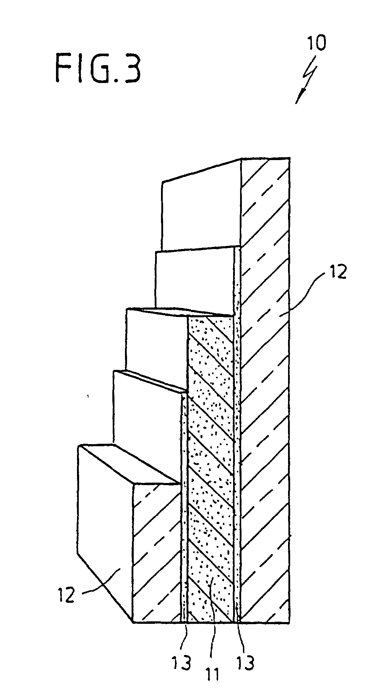

Ein Natursteinelement 10 bestehend aus einer mittig angeordneten Natursteinplatte 11 und zwei beidseitig mittels Gießharzschichten 13 jeweils befestigten Glasscheiben 12 ist in der Figur 3 dargestellt. Ein derartiges Natursteinelement 10 kann beispielsweise als Zwischenwandelement oder als Sichtschutz eingesetzt werden. Selbstverständlich ist es auch möglich, ein Natursteinelement 10 gemäß Figur 2 beidseitig der Natursteinplatte 11 mit einer aus mehreren Glasschichten 14 zusammengesetzten Glasscheibe 15 (Panzerglas) zu versehen.

Darüber hinaus wäre auf nicht dargestellte Weise auch ein Natursteinelement 10 aus einer mittig angeordneten, Glasscheibe 12 mit beidseitig der Glasscheibe angeordneten, beispielsweise unterschiedlichen Natursteinplatten 11 denkbar.

Desweiteren ist eine aus unterschiedlichen Natursteinmaterialien zusammengesetzte Natursteinplatte 11 herstellbar, wobei der Zusammenhalt dieser Natursteinplatte 11 dann wiederum durch mindestens eine mittels einer Gießharzschicht 13 befestigten Glasscheibe 12 gewährleistet werden müßte.

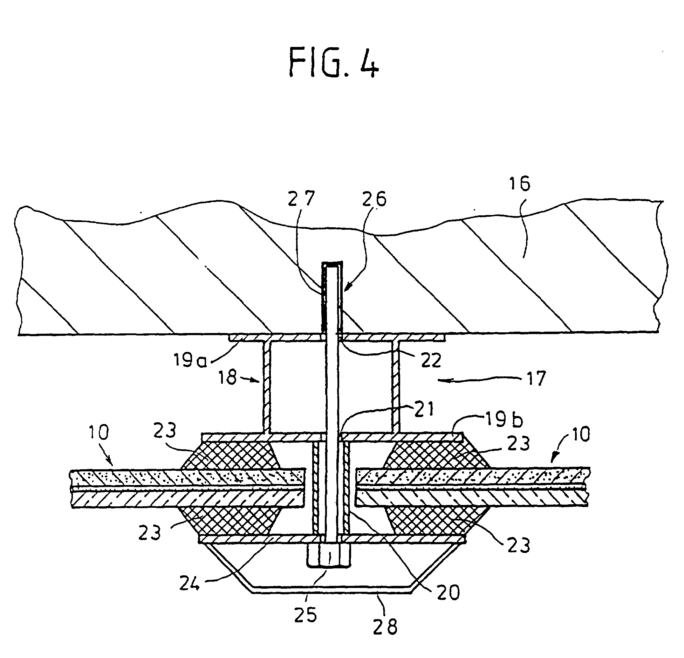

In den Figuren 4 bis 8 sind unterschiedliche Arten der Befestigung von Natursteinelementen 10 an einem Bauwerk 16 dargestellt.

In der Figur 4 ist zunächst ein Längsprofil 17 zur Befestigung von aneinanderstoßenden Natursteinelementen 10 zu erkennen, mit dem letztere rahmenartig eingefaßt werden.

Das Längsprofil 17 weist als Basisbauteil ein Rechteckprofil 18 auf, an welchem beidseitig jeweils eine überstehende Anlageplatte 19a und 19b angeordnet ist. Die zum Natursteinelement 10 gerichtete Anlageplatte 19b ist mittig mit einem rohrförmigen Distanzhalter 20 versehen, der einstückig stoffschlüssig mit dem Rechteckprofil 18 verbunden oder wie im dargestellten Beispiel ein separates Bauteil sein kann. Die zum Bauwerk 16 gerichtete Anlageplatte 19b weist im Bereich des Distanzhalters 20 eine Bohrung 21 auf. Gegenüberliegend dieser Bohrung 21 ist auch die Anlageplatte 19a mit einer Bohrung 22 versehen. Zur Befestigung der Natursteinelemente 10 werden letztere zunächst auf beiden Seiten randlich, umlaufend mit Dichtungen 23 versehen und dann beidseitig des Distanzhalters 20 so an die Anlageplatte 19b angelegt, daß zwischen der Anlageplatte 19 und dem Natursteinelement 10 die Dichtungen 23 angeordnet sind. In einem nächsten Schritt wird ein mit einer Spannplatte 24 versehener Gewindebolzen 25 durch den Distanzhalter 20 und die Bohrungen 21 und 22 hindurch in eine bereits hergestellte Bohrung 26 im Bauwerk 16 eingeschraubt, die mit einem nur schematisch dargestellten Metalldübel 27 versehen ist. Der Gewindebolzen 25 wird so weit in das Bauwerk 16 eingeschraubt, bis daß einerseits die Spannplatte 16 am Distanzhalter 20 anliegt und andererseits eine sichere Verklemmung der beiden Natursteinelemente 10 einschließlich der Dichtungen 23 zwischen der Anlageplatte 19b und der Spannplatte 16 erreicht ist.

Letztlich kann nach der Befestigung auf die Spannplatte 24 ein Zierprofil 28 zur Abdeckung aufgerastet oder aufgeclipst werden.

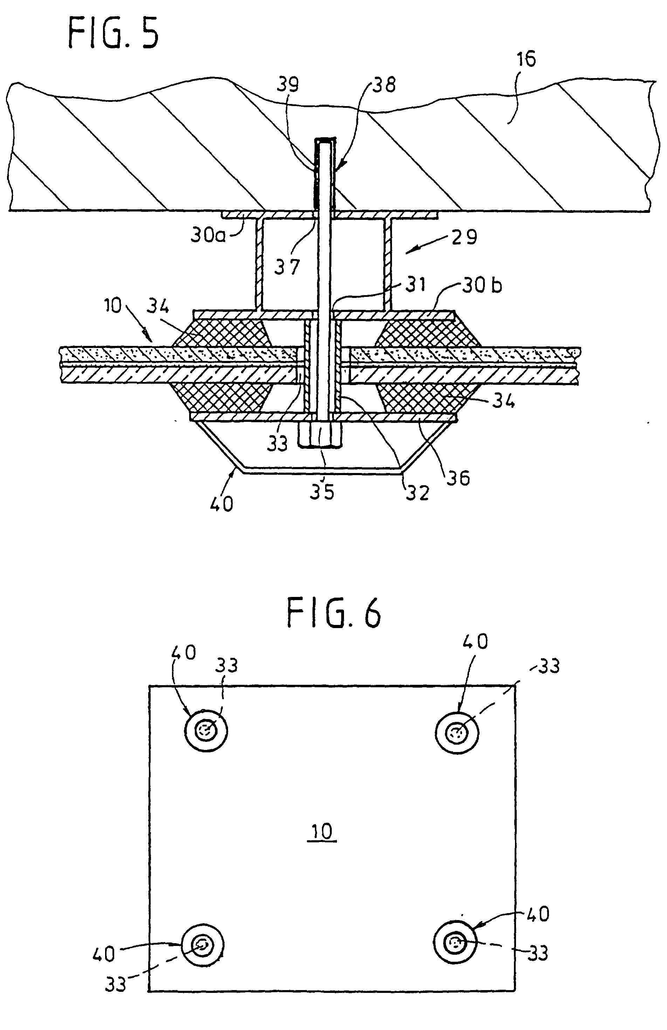

Während bei der zuvor beschriebenen Art der Befestigung eines Natursteinelements 10 rahmenartige Längsprofile 17 zur Befestigung von jeweils zwei Natursteinelementen 10 eingesetzt werden, ist in den Figuren 5 und 6 eine punktuelle Befestigung nur eines Natursteinelements 10 dargestellt.

In der Figur 5 ist ein in der Draufsicht rundes Befestigungselement 29 zu erkennen, welches eine topfförmige Gestalt aufweist, wobei der Boden bzw. Deckel dieses Befestigungselements 29 jeweils als nach außen erweiterte, kreisförmige Anlageplatte 30a und 30b ausgebildet sind. Während die Anlageplatte 30a zum Bauwerk 16 gerichtet ist, weist die Anlageplatte 30b zu dem Natursteinelement 10 und ist mittig im Bereich einer Bohrung 31 mit einem rohrförmigen Distanzhalter 32 versehen. Der Distanzhalter 32 kann einstückig stoffschlüssig mit dem Rechteckprofil 18 verbunden oder wie im dargestellten Beispiel ein separates Bauteil ein. Der rohrförmige Distanzhalter 32 durchgreift eine Durchgangsbohrung 33 durch das Natursteinelement 10. Beidseitig der Durchgangsbohrung 33 ist das Natursteinelement 10 jeweils von Ringdichtungen 34 umgeben. Zur Anbringung des Befestigungselements 29 wird nunmehr wiederum ein Gewindebolzen 35 mit darauf angeordneter Spannplatte 36 durch den Distanzhalter 32 und die Bohrung 31 in der Anlageplatte 30b sowie eine Bohrung 37 in der Anlageplatte 30a in eine Aufnahmebohrung 38 des Bauwerks 16 eingeschraubt, wobei diese Aufnahmebohrung mit einem nur schematisch dargestellten Metalldübel 39 versehen ist.

Zur Abdeckung des Befestigungselements 29 wird ein kreisförmiger Zierdeckel 39 auf der Spannplatte 36 verrastet oder verclipst.

In der Figur 6 erkennt man den optischen Eindruck eines an einem Bauwerk 16 befestigten Natursteinelements 10. Letztlich sind im Bereich des Natursteinelements 10 lediglich die vier Zierkappen 40 zu erkennen.

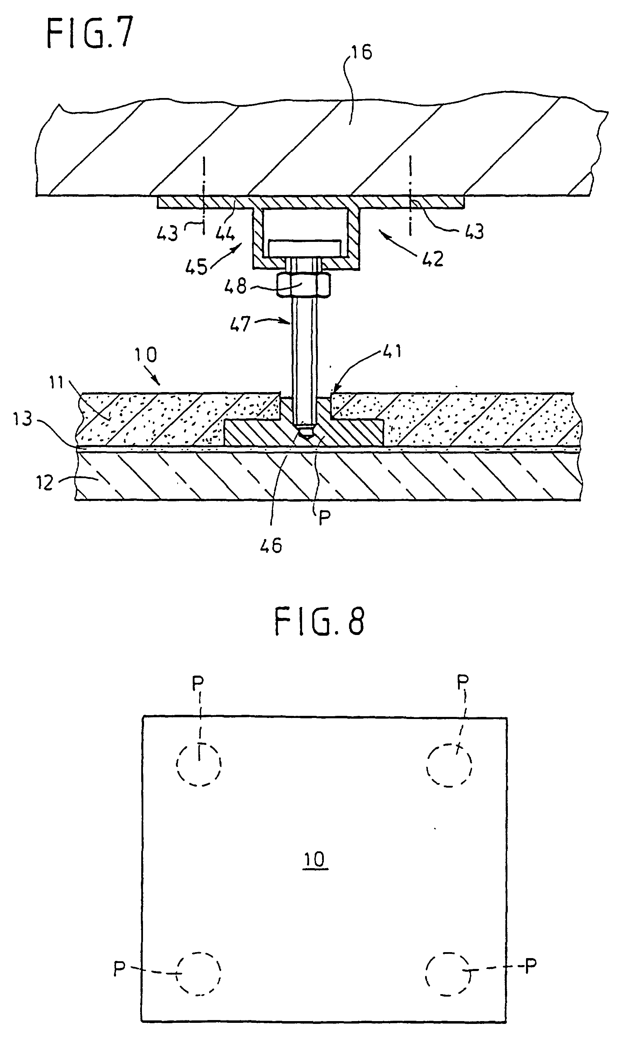

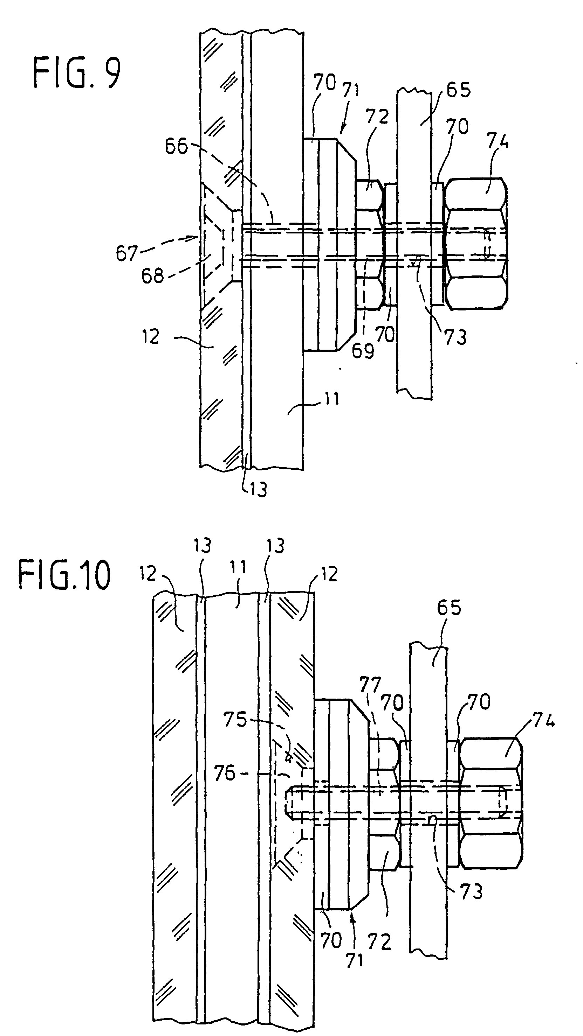

In den Figuren 7 und 8 ist eine "unsichtbare" Halterung eines Natursteinelements 10 dargestellt. Hierbei wird vor der Herstellung des Natursteinelements 10 in eine dünne Natursteinplatte 11 an mehreren Stellen eine T-förmige Durchgangsbohrung 41 eingefräst, in der dann ein sogenannter Pilzkopf P eingesetzt wird. Die Abmessungen des Pilzkopfes P sind so gewählt, daß eine ebene Auflagefläche für die Gießharzschicht 13 und die Glasscheibe 12 vorhanden ist bzw. nachträglich hergestellt werden kann. Dann wird auf die zuvor beschriebene Art und Weise ein Verbund zwischen den einzelnen Elementen erzeugt.

Zur Befestigung eines derartigen Natursteinelements 10 werden am Bauwerk 16 beispielsweise in vertikaler Richtung schienenförmige Längsprofile 42 über angedeutete Verschraubungen 43 befestigt. Das schienenförmige Profil 42 weist neben einer Anlagefläche 44 ein geschlitztes Rechteckprofil 45 auf, welche stoffschlüssig miteinander verbunden sind.

In eine bauwerksseitige Bohrung 46 des Pilzkopfes P wird eine Hammerkopfschraube 47 einschließlich Kontermutter 48 vollständig eingeschraubt. Zur Befestigung der Natursteinelemente 11 an den schienenförmigen Längsprofilen werden nun die Hammerkopfschrauben 47 von oben so eingeführt, daß der Kopf der Hammerschraube 47 innerhalb des geschlitzten Rechteckprofils 45 und die Kontermutter 48 außerhalb des Rechteckprofils 45 angeordnet sind. Soweit die gewünschte Position des Natursteinelements 10 erreicht ist, kann mit entsprechendem Werkzeug die Kontermutter 48 so angezogen werden, daß eine feste Verklemmung zwischen dem Rechteckprofil 45 und der Hammerkopfschraube 47 erzielt wird. Dadurch ist das Natursteinelement 10 fest am Bauwerk 16 angeordnet.

In der Figur 8 ist darüber hinaus der optische Eindruck eines derartig befestigten Natursteinelements 10 zu erkennen.

Anders als bei den zuvor beschriebenen Befestigungsarten, ragt bei dieser Art der Befestigung kein Befestigungsteil aus der Ebene des Natursteinelements 10 heraus, wobei jedoch durch die Glasscheibe 12 hindurch die Kontur des Pilzkopfes P zu erkennen ist.

Die Figur 9 zeigt eine weitere Möglichkeit der Befestigung eines Natursteinelements 10 an einer Unterkonstruktion 65, welche auf nicht dargestellte Weise am Bauwerk 16 angeordnet ist. Im vorliegenden Fall besteht das Natursteinelement 10 einer außenliegenden Glasplatte 12 und einer innenliegenden Natursteinplatte 11, welche auf die oben beschriebene Weise über eine Gießharzschicht 13 miteinander verbunden sind. Das Natursteinelement 10 weist eine durchgehende Bohrung 66 auf, in die von außen eine Senkkopfschraube 67 so einsetzbar ist, daß der Kopf 68 der Senkkopfschraube 67 innerhalb der Kontur der Glasscheibe 12 angeordnet ist. Auf ein bauwerksseitig aus der Natursteinplatte 11 herausragendes Gewindeteil 69 der Senkkopfschraube 67 wird zunächst eine Unterlegscheibe 70 aufgeschoben und dann eine Mutter 71 mit Schlüsselflächen 72 aufgeschraubt. Das aus der Schraube 71 herausragende Gewindeteil 69 durchgreift eine Bohrung 73 in der Unterkonstruktion 65, wobei beidseitig der Unterkonstruktion 65 jeweils noch eine weitere Unterlegscheibe 70 angeordnet wird. Diese Gesamtanordnung wird letztlich mittels einer auf das Gewindeteil 69 aufgeschraubten Mutter 74 an der Unterkonstruktion 65 befestigt.

Eine Möglichkeit der tatsächlich unsichtbaren Befestigung eines als Fassadenverkleidung dienenden Natursteinelements 10 an einem Bauwerk 16 zeigt die Figur 10. Hierbei wird das aus einer Natursteinplatte 11 mit beidseitig angeordneten Glasscheiben 12 bestehende Natursteinelement 10 über eine in der bauwerksseitigen Glasscheibe 11 vorhandene Befestigung am Bauwerk 16 angeordnet. Hierbei wird von der eigentlichen Herstellung des Natursteinelements 10 die bauwerksseitige Glasscheibe 12 mit einer Bohrung 75 versehen, in die eine Flanschmutter 76 eingelegt wird. Danach findet auf die vorher beschriebene Weise die Verbindung der Glasscheibe 11 über eine Gießharzschicht 13 mit der Natursteinplatte 12 sowie einer weiteren, außen angeordneten Glasscheibe 11 statt. Zur Befestigung dieses Natursteinelements 10 an der Unterkonstruktion 65 wird eine Gewindestange 77 zunächst in die Flanschmutter 76 eingeschraubt. Dann wird auf die im Zusammenhang mit der Figur 9 beschriebenen Weise das Natursteinelement 10 an der Unterkonstruktion 65 befestigt.

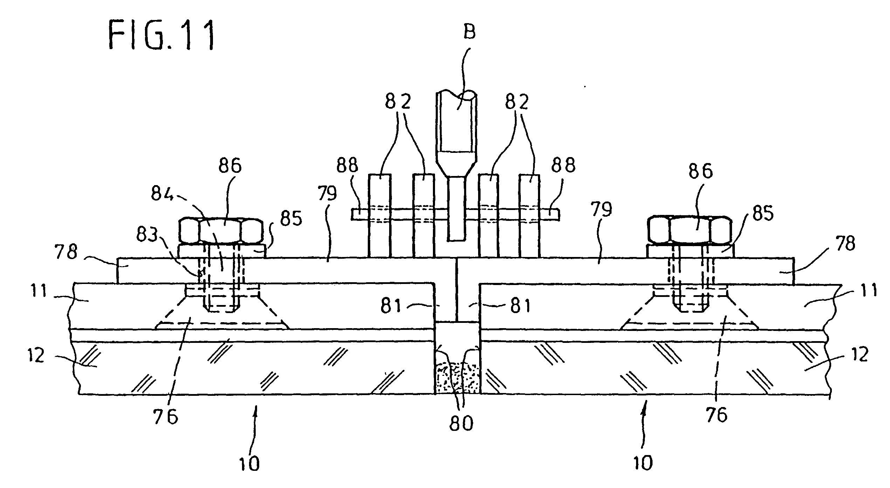

Die Figur 11 zeigt letztlich eine Variante der Befestigung, bei der zwei Natursteinelemente 10 gegenüberliegend jeweils randlich eine gemäß der Ausführungsform Figur 10 im Natursteinelement 10 angeordnete Flanschmutter 76 aufweisen.

Im Bereich der Flanschmutter 76 wird jeweils eine Laschenplatte 78 bauwerksseitig an das Natursteinelement angelegt. Die Laschenplatte 78 weist eine Anlageplatte 79, zwei an Stirnflächen 80 der Natursteinelemente 10 anliegende Anschlaglaschen 81 sowie zwei zum Bauwerk 16 gerichtete Befestigungslaschen 82 auf. Die Laschenplatte 78 wird aus einem rechteckförmigen Metallblech erstellt, wobei die Anschlaglaschen 81 und die Befestigungslaschen 82 aus dem Metallblech ausgestanzt und dann entsprechend umgebogen werden. Im Bereich gegenüberliegend der Flanschmutter 76 ist die Laschenplatte 78 mit einer Bohrung 83 versehen, durch die ein Gewindebolzen 84 in die Flanschmutter 76 eingeschraubt ist. Mittels einer Unterlegscheibe 85 und einer Mutter 86 kann die Laschenplatte 78 fest am Natursteinelement 10 angeordnet werden, wobei gleichzeitig die Anschlaglaschen 81 vollflächig an den Stirnflächen 80 anliegen.

Letztlich weisen die Befestigungslaschen 82 zwei miteinander fluchtende Bohrungen 87 auf. In diese Bohrungen 87 wird ein Befestigungsstift 88 eines herkömmlichen Befestigungsbauteils B für Fassadenelemente eingeschoben. Wie in Figur 11 ersichtlich, kann als nächstes ein ebenfalls auf die vorbeschriebene Weise mit einer Laschenplatte 78 versehenes Natursteinelement 10 auf den Befestigungsstift 88 eines Befestigungsbauteils B aufgeschoben werden. Zum Schutz einer zwischen den beiden Natursteinelementen 10 entstehenden Fuge 89 gegen eindringende Feuchtigkeit wird letztere mit einer Abdichtmasse 90, beispielsweise Silikon, verschlossen.

Bezüglich der oben beschriebenen Ausführungsformen der Befestigung sei noch darauf hingewiesen, daß sämtliche zuvor beschriebenen, unterschiedlichen Natursteinelemente 10 mit derartigen Befestigungen versehen werden können.

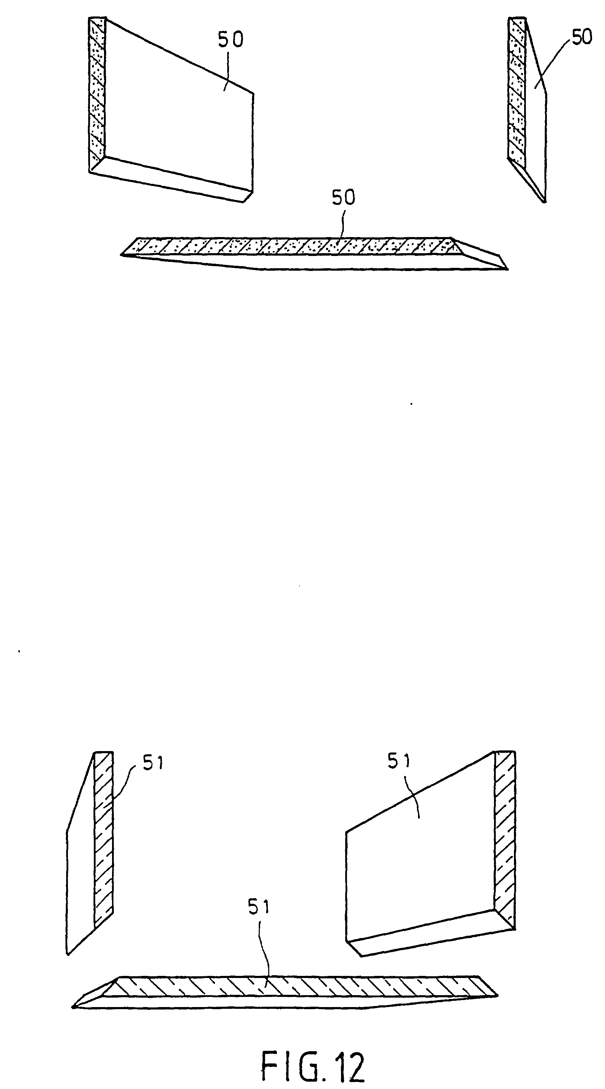

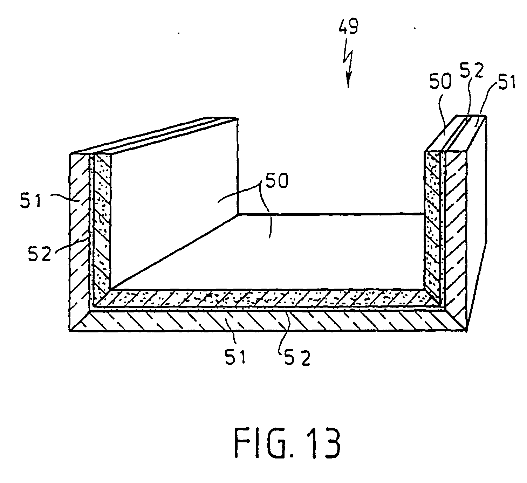

In den Figuren 12 und 13 ist ein beispielhaftes, aus Natursteinelementen 10 zusammengesetztes Winkelbauteil 49 in Explosionsdarstellung (s. Fig. 12) und in zusammengefügter Darstellung (s. Fig. 13) dargestellt. Derartige Winkelbauteile 49 können als Fertigbauteile zur Verkleidung von Rollladenkästen oder dergleichen eingesetzt werden. In der Explosionsdarstellung gemäß Figur 12 ist zu erkennen, daß zunächst Natursteinbauteile 50 und Glasbauteile 51 jeweils auf Gehrung geschnitten werden müssen. Dann werden diese Bauteile 50 und 51 unter Zwischenbringung einer Gießharzschicht 52 zusammengefügt und auf die oben beschriebene Weise miteinander verbunden. Dadurch entsteht ein relativ stabiles Winkelbauteil 49, welches direkt montiert werden kann.

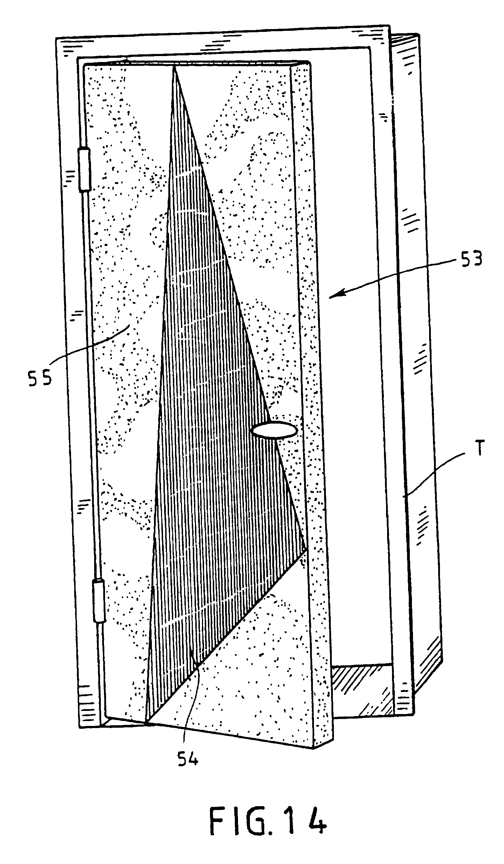

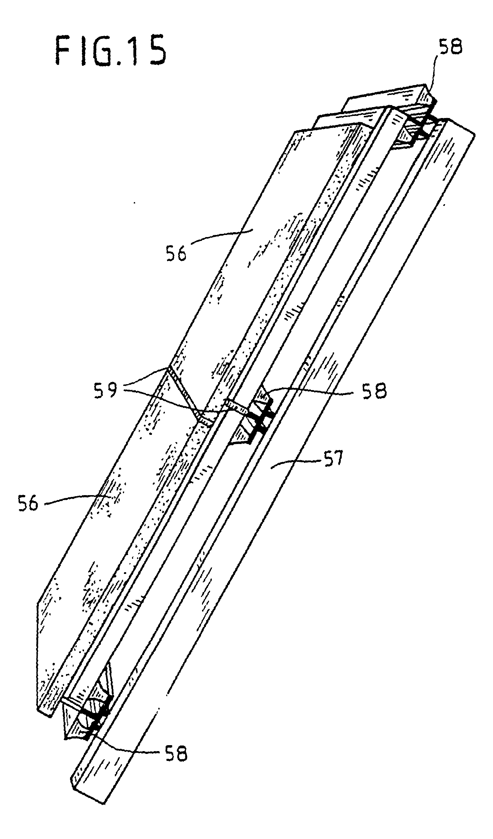

In den Figuren 14 bis 17 sind verschiedene zusätzliche Anwendungsbeispiele dargestellt.

So ist es unter anderem möglich, daß ein gemäß Figur 3 aufgebautes Natursteinelement 10 zur Herstellung eines in einem Türrahmen T eingesetztes Türblatt 53 verwendet wird. Im dargestellten Beispiel ist die Natursteinplatte 11 mosaikartig aus einer Granitplatte 54 und einer Marmorplatte 55 zusammengesetzt, wobei die Natursteinplatte 11 auf bekannte Weise über Gießharzschichten beidseitig mit Glasscheiben 12 verbunden ist.

Auch ist ein Natursteinelement 10 beispielsweise gemäß Figur 1 als großformatige Dachplatte 56 in der dargestellten Weise verwendbar. Zu diesem Zweck muß auf den Dachbalken 57 eine Aluminiumkonstruktion 58 angeordnet werden, welche der Befestigung der großformatigen Dachplatten 56 dient. Desweiteren ist ein Überlappen der einzelnen Natursteinelemente 10, wie bei herkömmlichem Bedachungsmaterial üblich, notwendig, wobei Fugen 59 durch elastisches Material verfüllt werden.

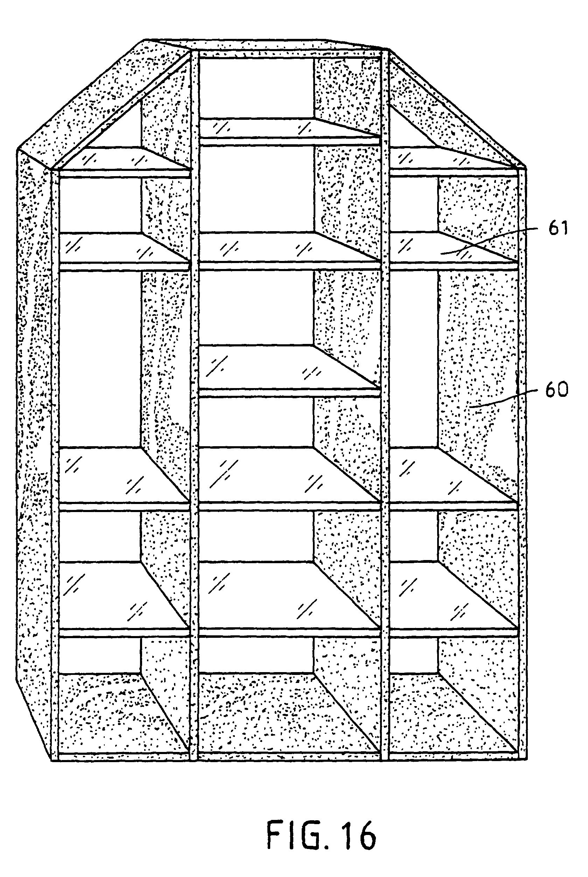

Denkbar ist ebenso der Einsatz der oben bereits beschriebenen Natursteinelemente 10 im Bereich von tragenden Möbelbauteilen 60 - wie in Figur 16 dargestellt -, wobei dies mit Glasbauteilen 61 kombiniert werden kann. Neben hoher Standfestigkeit ergibt sich dabei ein sehr vorteilhafter optischer Eindruck der durch die Verwendung unterschiedlicher Natursteinmaterialien auch variiert werden kann.

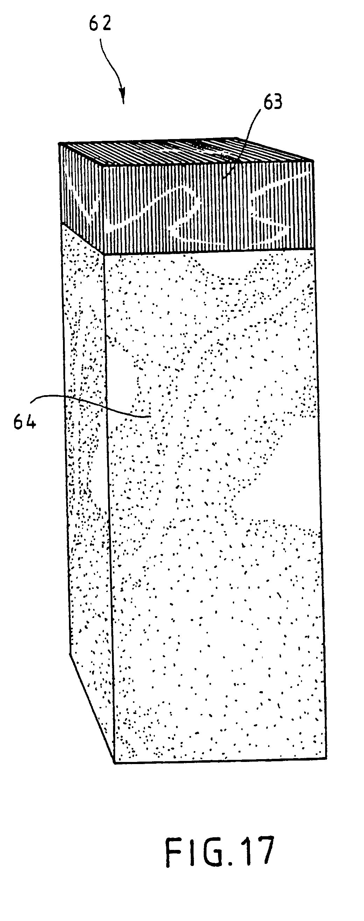

Letztlich sind derartige Natursteinelemente 10 auch zur Herstellung von beispielshaft in Figur 17 dargestellten Leuchtsäulen 62 verwendbar, die aus einem lichtundurchlässigen Deckel 63 und einem aus Natursteinelementen 10 aufgebauten Leuchtkorpus 64 bestehen. Falls in einer derartigen Leuchtsäule 62 eine Lichquelle angeordnet wird, ergibt sich insbesondere bei hellen Natursteinplatten 10 ein gewisser Lichtdurchtritt, wobei die Steinstruktur auf sehr interessante Weise sichtbar wird.

Grundsätzlich ist es natürlich auch denkbar, daß z.B. als Wand oder Deckenelement eingesetzte Natursteinelemente 10 flächig hinterleuchtet werden und so ein besonders interessanter optischer Eindruck entsteht.

## Patentansprüche

1. Natursteinelement mit mindestens einer dünnen Natursteinplatte und einer damit großflächig verbundenen Tragplatte, die aus wenigstens einer Glasscheibe (12,15;51) besteht, die mittels einer transparenten Harzschicht mit der Natursteinplatte (11) verbunden ist, wobei das Natursteinelement an einem weiteren Natursteinelement bzw. an einem Trägerelement befestigbar ist,
**dadurch gekennzeichnet,**
**daß** die Harzschicht eine Gießharzschicht (13) auf der Basis von Polyesterharz, Poly(methymeth)acrylat, Polyurethanen oder Epoxiden ist, und daß im Harz der Gießharzschicht (13) ein Haftvermittler auf der Basis von einem oder mehreren Silanen und/oder Titanaten und/oder Aluminaten enthalten ist.

2. Natursteinelement nach Anspruch 1, **dadurch gekennzeichnet, daß** die Natursteinplatte (11) eine Sichtfläche aufweist, an welcher mindestens eine Schutz-Glasscheibe angeordnet ist.

3. Natursteinelement nach Anspruch 1, **dadurch gekennzeichnet, daß** die Natursteinplatte (11) eine Sichtfläche und an der von der Sichtfläche wegweisenden Fläche wenigstens eine Glasscheibe (12) aufweist.

4. Natursteinelement nach Anspruch 1, **dadurch gekennzeichnet, daß** die Natursteinplatte (11) beidseitig jeweils mit mindestens einer Glasscheibe (12) versehen ist.

5. Natursteinelement nach einem der vorhergehenden Ansprüche, **dadurch gekennzeichnet, daß** die Glasscheibe (12, 15, 51) aus Floatglas, Ornamentglas, Spiegelglas, Drahtspiegelglas, Brandschutzglas, Wärmeschutzglas, Schallschutzglas, Sicherheitsschutzglas, hitzebeständigem Glas, Borosilicat-Glas bzw. Keramikglas oder Isolierglas oder einer Kombination der genannten Elemente besteht.

6. Natursteinelement nach einem der vorhergehenden Ansprüche, **dadurch gekennzeichnet, daß** die Glasscheibe (12, 15, 51) aus vorzugsweise thermisch oder chemisch teilvorgespanntem Sicherheitsglas besteht.

7. Natursteinelement nach einem der vorhergehenden Ansprüche, **dadurch gekennzeichnet, daß** die Glasscheibe (12, 15, 51) aus thermisch oder chemisch vorgespanntem Einscheiben-Sicherheitsglas besteht.

8. Natursteinelement nach einem der vorhergehenden Ansprüche, **dadurch gekennzeichnet, daß** der Haftvermittler Vinyltrimethoxysilan und/oder Vinyltriethoxysilan und/oder Vinyltri(ethoxymethoxy)silan und/oder 3-Mercaptopropyltrimethoxysilan und/oder 3-Glycidylpropyltrimethoxysilan und/oder 3-Aminopropyltriethoxysilan und/oder N-β-aminoethyl-γ-aminopropyl-trimethoxysilan und/oder Triethanolaminozirkönat und/oder Isopropyltitanat und/oder Triethanolamintitanat enthält.

## Claims

1. Natural stone element with at least one thin natural stone plate and a supporting plate connected thereto on a large surface which consists of at least one glass pane (12,15;51) which is connected to the natural stone plate (11) through a transparent resin layer, wherein the natural stone element can be mounted to a further natural stone element or a carrier element, **characterized in that** the resin layer is a casting resin layer (13) on the basis of polyester resin, poly(methymeth)acrylate, polyurethane or epoxy resins and that the resin of the casting resin layer (13) contains a bonding agent on the basis of one or more silanes and/or titanates and/or aluminates.

2. Natural stone element according to claim 1, **characterized in that** the natural stone plate (11) has a visible surface on which at least one protecting glass pane is disposed.

3. Natural stone element according to claim 1, **characterized in that** the natural stone plate (11) has a visible surface and the surface facing away from the visible surface has at least one glass pane (12).

4. Natural stone element according to claim 1, **characterized in that** both sides of the natural stone plate (11) are provided with at least one glass pane (12) each.

5. Natural stone element according to any one of the preceding claims, **characterized in that** the glass pane (12,15,51) consists of float glass, figured glass, mirror glass, wire mirror glass, fire resisting glass, heat protection glass, sound-insulation glass, safety protection glass, heat-resisting glass, borosilicate glass or ceramic glass or insulation glass or a combination of the mentioned elements.

6. Natural stone element according to any one of the preceding claims, **characterized in that** the glass pane (12,15,51) consists of preferably thermally or chemically partially pre-stressed safety glass.

7. Natural stone element according to any one of the preceding claims, **characterized in that** the glass pane (12,15,51) consists of thermally or chemically pre-stressed tempered safety glass.

8. Natural stone element according to any one of the preceding claims, **characterized in that** the bonding agent contains vinyltrimethoxysilane and/or vinyltriethoxysilane and/or vinyltri(ethoxymethoxy)silane and/or 3-mercaptopropyltrimethoxysilane and/or 3-glycidylpropyltrimethoxysilane and/or 3-aminopropyltriethoxysilane and/or N-β-aminoethyl-γ-aminopropyl-trimethoxysilane and/or triethanolaminocirconate and/or isopropyltitanate and/or triethanolamine titanate.

## Revendications

1. Élément de pierre naturelle comprenant au moins une plaque mince en pierre naturelle et une plaque porteuse reliée à celle-ci sur une grande surface et constituée par au moins une plaque de verre (12, 15 ; 51) qui est reliée à la plaque en pierre naturelle (11) au moyen d'une couche de résine transparente, ledit élément de pierre naturelle étant susceptible d'être fixé à un autre élément de pierre naturelle, ou respectivement à un élément porteur,
**caractérisé en ce que** la couche de résine est une couche de résine coulée (13) à base de résine de polyester, de poly(méthylméth)acrylate, de polyuréthane ou d'époxyde, et **en ce que** la résine de la couche de résine coulée (13) contient un agent adhésif à base d'un ou plusieurs silanes et/ou titanates et/ou aluminates.

2. Élément de pierre naturelle selon la revendication 1, **caractérisé en ce que** la plaque en pierre naturelle (11) comporte une surface de vision au niveau de laquelle est agencée au moins une plaque en verre protectrice.

3. Élément de pierre naturelle selon la revendication 1, **caractérisé en ce que** la plaque en pierre naturelle (11) comporte une surface de vision, et comprend au moins une plaque en verre (12) au niveau de la surface détournée de la surface de vision.

4. Élément de pierre naturelle selon la revendication 1, **caractérisé en ce que** la plaque en pierre naturelle (11) est dotée des deux côtés d'au moins une plaque en verre respective (12).

5. Élément de pierre naturelle selon l'une des revendications précédentes, **caractérisé en ce que** la plaque en verre (12, 15, 51) est réalisée en verre flotté, en verre ornemental, en verre à miroir, en verre à miroir armé, en verre de protection anti-incendie, en verre de protection thermique, en verre de protection phonique, en verre de sécurité, en verre réfractaire, en verre au borosilicate, en verre de céramique, en verre isolant ou encore une combinaison des éléments cités.

6. Élément de pierre naturelle selon l'une des revendications précédentes, **caractérisé en ce que** la plaque en verre (12,15, 51) est réalisée en verre de sécurité de préférence mis partiellement sous précontrainte par voie thermique ou chimique.

7. Élément de pierre naturelle selon l'une des revendications précédentes, **caractérisé en ce que** la plaque en verre (12,51, 15,51) est réalisée en verre de sécurité monocouche précontraint par voie thermique ou chimique.

8. Élément de pierre naturelle selon l'une des revendications précédentes, **caractérisé en ce que** l'agent adhésif contient du vinyltriméthoxysilane et/ou vinyltriéthoxysilane et/ou vinyltri(éthoxyméthoxy)silane et/ou 3-mercaptopropyltriméthoxysilane et/ou 3-glycidylpropyltriméthoxysilane et/ou 3-aminopropyltriéthoxysilane et/ou N-β-aminoéthyl-γ-aminopropyl-triméthoxysilane et/ou triéthanolaminozirconate et/ou isopropyltitanate et/ou triéthanolaminotitanate.
